# EUROPÄISCHE PATENTANMELDUNG

(11) **EP 2 113 161 A1**
(43) Veröffentlichungstag der Anmeldung: **04.11.2009**
(21) Anmeldenummer: 09005570.8
(22) Anmeldetag: 21.04.2009
(51) Int. Cl.: A01C 7/06, A01C 7/20

(54) **Sämaschine**

(30) Priorität: 25.04.2008 DE 102008020810
(71) Anmelder: Amazonen-Werke H. Dreyer GmbH & Co. KG, 49205 Hasbergen (DE)
(72) Erfinder: Brook, Gebhard, 49429 Visbek (DE); Steen, Rüdiger, 27798 Hude (DE); Tiessen, Reimer Uwe, 26135 Oldenburg (DE)

(57) **Zusammenfassung**

Verteilmaschine mit zumindest je einem Vorratsbehälter (3;4) zur getrennten Aufnahme von Saatgut und Düngemitteln, in deren unteren Bereichen beabstandet zueinander Auslauföffnungen mit zugeordneten Dosierelementen (6) angeordnet sind, wobei unter den Dosierelementen (6) Leitelemente angeordnet sind, die einen Einlasstrichter (12) aufweisen, wobei jeweils jedem Saatgut dosierenden Dosierelement (6) ein derartiger Einlasstrichter (12) zugeordnet ist, wobei die dem einen Vorratsbehälter (4) zugeordneten Dosierelemente (6) in einer Querreihe und einer Ebene oberhalb den dem anderen Vorratsbehälter (3) zugeordnete Dosierelemente (6) angeordnet sind. Es ist vorgesehen, dass zwischen den oberen Dosierelementen (6) und den Einlauftrichtern (12) Materialleitelemente (14,19) angeordnet sind, welche in dem Zwischenraum (13) zwischen zwei unteren benachbart zueinander angeordneten Dosierelementen (6) angeordnet sind.

## Beschreibung

Die Erfindung betrifft eine Verteilmaschine, insbesondere Sämaschine gemäß des Oberbegriffes des Patentanspruches 1.

Eine derartige Verteilmaschine ist beispielsweise in der DE 34 29 817 A1 beschrieben. Diese Verteilmaschine weist eine sich quer zur Fahrtrichtung lang erstreckte Behältereinheit auf, die durch eine Zwischenwand in zwei Vorratsbehälter zur getrennten Aufnahme verschiedener Materialien ausgestaltet ist. Der eine Vorratsbehälter ist für die Aufnahme von Saatgut und der andere Vorratsbehälter zur Aufnahme von Düngemitteln vorgesehen. Für jedes Säschar ist jeweils ein Dosierorgan für die Dünger- und für die Saatgutdosierung mit einer entsprechend zugeordneten weiterführenden Leitung vorgesehen.

Die jeweilige Zuordnung eines Düngerdosierrades zu einem Säschar ist relativ aufwendig. Weiterhin ist die jeweils getrennte Leitung von Saatgut und Dünger von dem jeweiligen Dosierorgan zu dem Säschar ebenfalls sehr aufwendig.

Der Erfindung liegt die Aufgabe zugrunde, eine vereinfachte und kompakte Anordnung der zur gleichzeitigen Ausbringung von Saatgut und Dünger ausgestatteten Verteilmaschine in einfacher Weise zu schaffen.

Diese Aufgabe wird erfindungsgemäß dadurch gelöst, dass zwischen den in der oberen Querreihe angeordneten Dosierelementen und den Einlauftrichtern das von den in der oberen Querreihe angeordneten Dosierelementen zu den Einlauftrichtern geförderte Material leitende Materialleitelemente angeordnet sind, dass die Materialleitelemente in dem Zwischenraum zwischen zwei in der unteren Querreihe benachbarten zueinander angeordneten Dosierelementen angeordnet sind. Infolge dieser Maßnahmen ist jeweils zwei Säscharen bzw. den zu den Säscharen führenden Materialleitungen ein gemeinsames Dosierorgan für eine Materialsorte aus einem der beiden Vorratsbehälter zugeordnet. Versuche haben gezeigt, dass eine ungefähre Halbierung der von einem Dosierelement dosierten Düngermenge ausreichend ist. Durch die verringerte Anzahl bzw. Halbierung der Dosierelemente für einen Vorratsbehälter, der insbesondere für die Ausbringung von Düngemitteln genutzt wird, ergibt sich eine erhebliche Vereinfachung der Dosierung, ein erheblich verringerter Montageaufwand und somit eine preisgünstigere Herstellung.

Eine einfache Zuordnung der in der einen Reihe reduzierten Anzahl von Dosierelementen zu der Anzahl der den Ausbringorganen entsprechenden Dosierelementen lässt sich in vorteilhafter Weise dadurch erreichen, dass die in der oberen und der unteren Querreihe angeordneten Dosierelemente seitlich versetzt zueinander angeordnet sind und zwar derart, dass jeweils ober- oder unterhalb des Zwischenraumes zwischen benachbarten Dosierelementen der anderen Querreihe ein Dosierelement angeordnet ist.

Um die von einem Dosierelement dosierte Materialmenge bereits unmittelbar nach dem Dosieren auf zwei Leitungen aufteilen zu können, ist vorgesehen, dass in den Materialleitelementen des Materialleitschachts eine den Materialschacht in zwei voneinander getrennte Leitkanäle aufteilende Trennwand angeordnet ist.

Weitere Einzelheiten der Erfindung sind den übrigen Unteransprüchen, der Beispielsbeschreibung und den Zeichnungen zu entnehmen. Hierbei zeigen
- Fig. 1: die Anordnung der den beiden Vorratsbehältern einer Vorratsbehältereinheit zugeordneten Dosierorgane in Seitenansicht, im Teilschnitt und Teilansicht,
- Fig. 2: die Anordnung der Dosierelement entsprechend Fig. 1, wobei die eine Seitenwand des Leitelementes abgenommen ist,
- Fig. 3: die Anordnung der der Vorratsbehältereinheit zugeordneten Dosierelemente in perspektivischer Darstellung von schräg oben-hinten in Teilansicht,
- Fig. 4: die Anordnung der Dosierelemente an der Vorratsbehältereinheit gemäß Fig. 3 bei abgenommene hintere Leitplatte der Leitelemente,
- Fig. 5: die Anordnung zweier übereinander angeordneter Dosierelemente der Vorratseinheit gemäß Fig. 4 in vergrößertem Maßstab,
- Fig. 6: die Ausgestaltung der Leitelemente in der Ansicht VI - VI und
- Fig. 7: die Anordnung der Leitelemente entsprechend Fig. 5, jedoch mit einer in dem Leitelement eingesetzten Trennwand.

Die Verteilmaschine ist als Sämaschine ausgebildet und weist eine Vorratsbehältereinheit 1 auf, die sich quer zur Fahrtrichtung 2 erstreckt. Diese Vorratsbehältereinheit 1 weist zwei langgestreckte Vorratsbehälter 3 und 4zur getrennten Aufnahme von Saatgut und Düngemitteln auf. Hierzu ist in der Vorratsbehältereinheit 1 die Trennwand 5 angeordnet, die die Vorratsbehältereinheit 1 in die beiden getrennten Vorratsbehälter 3 und 4 aufteilt. In der Zeichnung ist lediglich ausschnittsweise der Bereich der Vorratsbehältereinheit dargestellt, in welchem die dem Vorratsbehältern 3 und 4 zugeordneten Dosierelemente 6 angeordnet sind. In den unteren Bereichen des jeweiligen Vorratsbehälters 3, 4 sind in einer schräg verlaufenden Wandung 7, im Ausführungsbeispiel der Rückwand der Vorratsbehälter 3, 4 Auslauföffnungen mit zugeordneten Dosierelementen 6 angeordnet. Die Dosierelemente 6 weisen ein Dosiergehäuse 8 auf, in welchem jeweils ein Saatgutdosierrad 9 oder ein Düngerdosierrad 10 angeordnet ist. Die einzelnen Dosierräder 9, 10 sind jeweils drehfest auf einer rotierend angetriebenen Dosierwelle 11 angeordnet. Die jeweilige Dosierwelle 13 wird über eine nicht dargestellte Antriebs-und Einstellvorrichtung in einstellbarer Weise und bekannter Weise angetrieben.

Unter den Dosierelementen 6 sind Auffangtrichter 12 angeordnet, die ausgebildet, den Beginn zu Ausbringelementen führenden Materialleitungen bilden.

Die Dosierelemente 6, die dem unteren Vorratsbehälter 3 zugeordnet sind, und in einer unteren Querreihe angeordnet sind, sind beabstandet zueinander angeordnet, so dass zwischen den Dosiergehäuse 8 der unteren Dosierelemente 6 jeweils ein Zwischenraum 13 vorhanden ist. Die Dosierelemente 6 in der oberen Querreihe, die dem anderen Vorratsbehälter 4 zugeordnet sind, sind oberhalb der Dosierelemente 6 der unteren Querreihe angeordnet und zwar ebenfalls seitlich beabstandet zueinander und zwar derart, dass sich die Dosierelemente 6 der oberen Querreihe oberhalb des Zwischenraumes 13 zwischen den Dosierelementen der darunterliegenden Querreihe angeordnet sind.

Somit sind die in der oberen und der unteren Querreihe angeordneten Dosierelemente 6 seitlich versetzt zueinander angeordnet und zwar derart, dass jeweils oberhalb oder unterhalb des Zwischenraumes 13 zwischen benachbarten Dosierelementen 6 der anderen Querreihe ein Dosierelement 6 angeordnet ist.

Im Ausführungsbeispiel ist vorgesehen, dass in der oberen Querreihe nur die halbe Anzahl der Dosierelemente 6 der unteren Querreihe angeordnet sind. Die in der oberen Querreihe angeordneten Dosierelemente 6sind seitlich versetzt zueinander angeordnet und zwar derart, dass die jeweils oberhalb des Zwischenraumes 13 zwischen benachbarten Dosierelementen 6 der unteren Querreihe angeordnet sind. Hierbei ist jeweils jedem zweiten Zwischenraum 13 ein Dosierelement 6 der oberen Querreihe zugeordnet.

Die Dosierelemente 6 in der unteren Querreihe dosieren das in dem unteren Vorratsbehälter 3 sich befindliche Saatgut, während die Dosierelemente 6 in der oberen Querreihe die sich in dem oberen Vorratsbehälter 4 befindlichen Düngemittel dosieren.

Die Einlasstrichter 12, die das Material zu den Ausbringorganen, beispielsweise Säschare führenden Materialleitungen zugeordnet sind, sind trichterförmig sich nach oben erweiternd ausgebildet. Hierbei ist jeweils ein Einlasstrichter 12 ein um Dosierelement 6 der unteren Querreihe zugeordnet. Hierbei sind die Einlasstrichter 12 in ihrer Bereite breiter ausgebildet als die Dosierelemente 6 und ragen bis zur Mitte des Zwischenraumes 13. Die Einlasstrichter 12 schließen mit ihren Seitenwänden jeweils dicht aneinander an, so dass sie sich ohne Zwischenraum über die gesamte Breite der Vorratsbehältereinheit 1 erstrecken. Es wird so ein durchgehender Auffangbereich durch die Einlasstrichter 12 bildet.

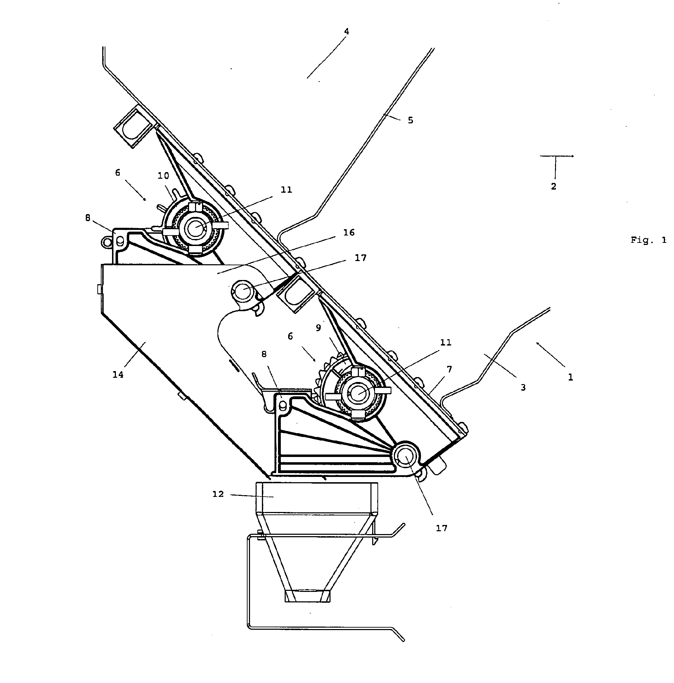

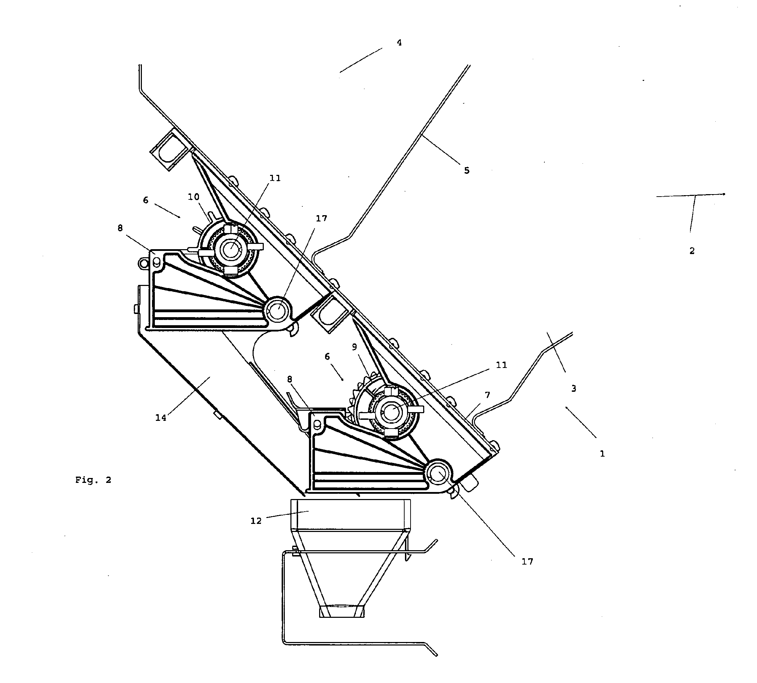

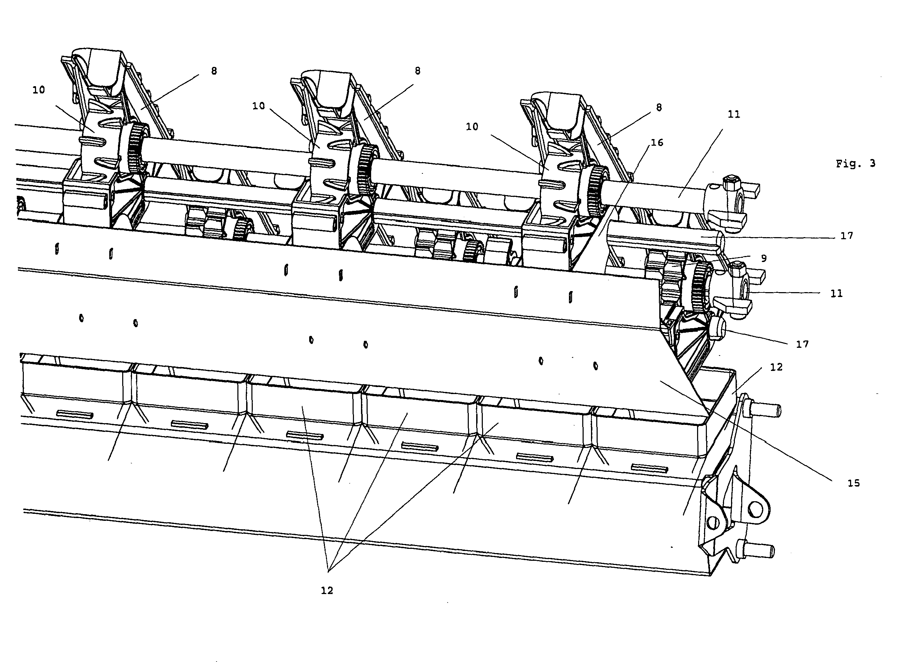

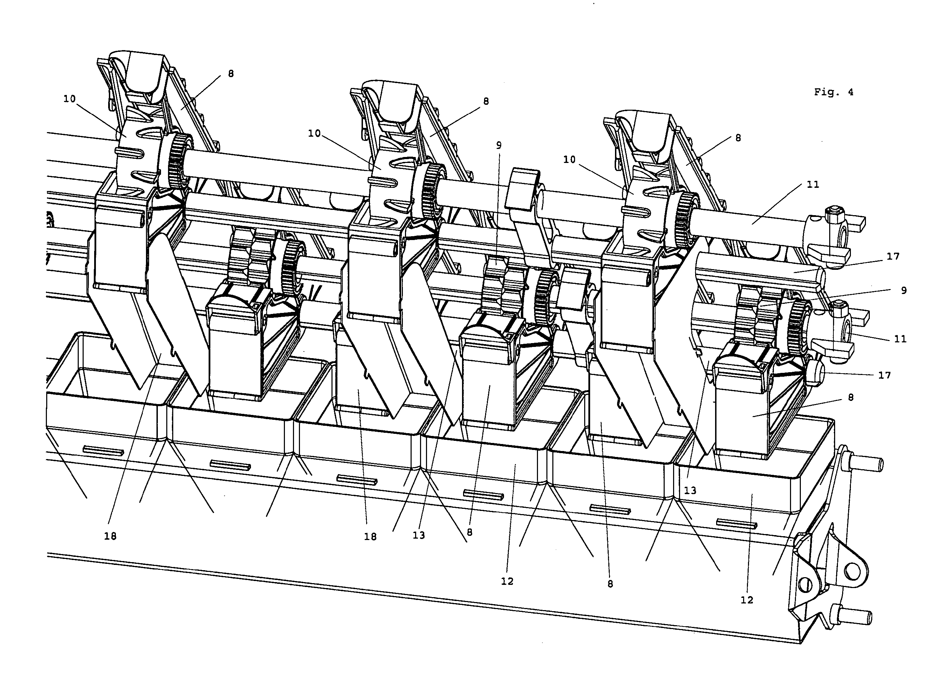

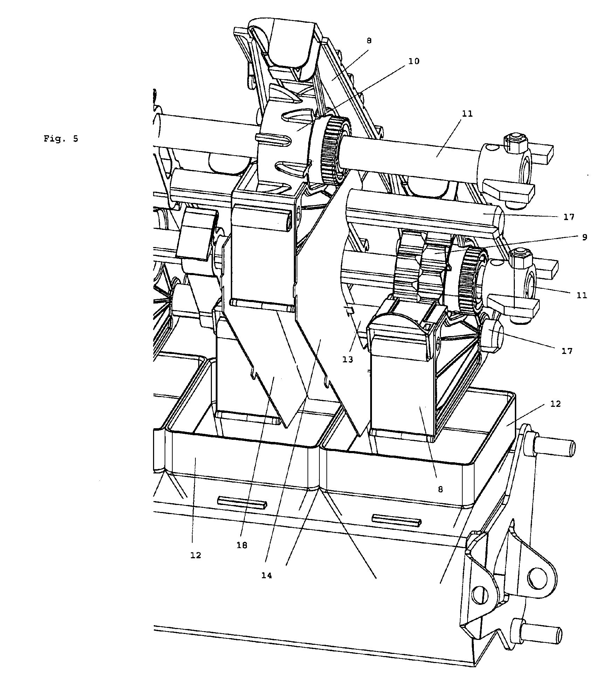

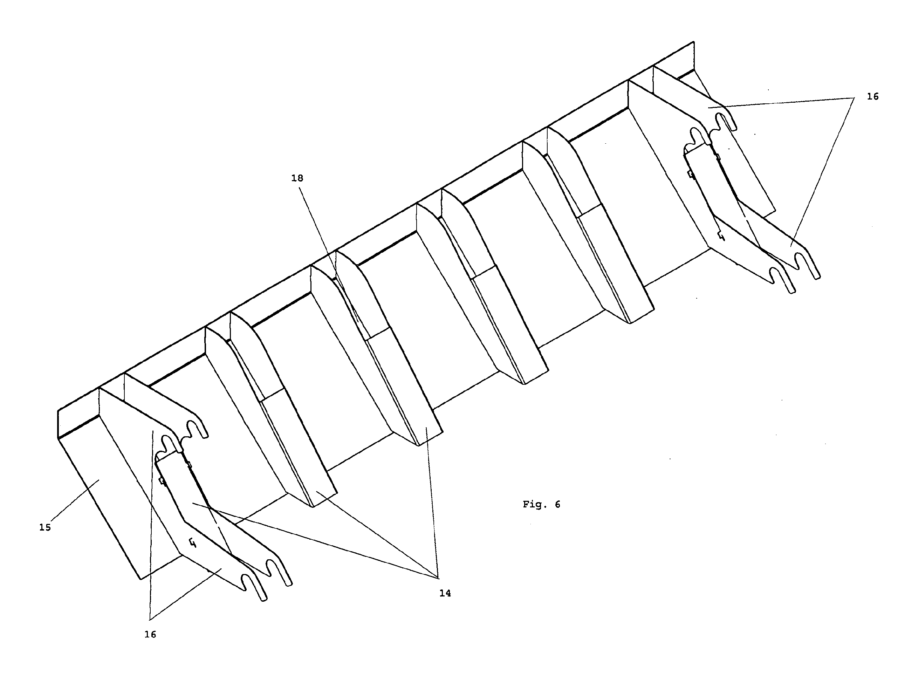

Zwischen den in der oberen Reihe angeordneten Dosierelementen 6 und den Einlasstrichtern 12 sind von der in der oberen Querreihe angeordneten Dosierelementen 6 zu den Einlasstrichtern 12 geförderte Material entsprechend leitende Materialleitelemente 14 angeordnet. Diese Materialleitelemente 14 sind in den Zwischenräumen 13 zwischen zwei in der unteren Querreihe benachbart zueinander angeordneten Dosierelementen 6 angeordnet, wie die Fig. 4 und 5 zeigen. Die Materialleitelemente 14, die in den Zwischenraum 13 zwischen den Dosierelementen 6 der unteren Querreihe angeordnet sind, sind an einer durchgehenden Rückwand 15 angeordnet, die mittels Halterungen 16 an an der Vorratsbehältereinheit angeordneten Halterungen, die von den Bodenklappenwelle 17 gebildet werden, angeordnet werden kann und so die in den Fig.1 bis 6 dargestellte Position einnehmen.

Das von den Dosierelementen 6 der oberen Querreihe dosierte Material, im Ausführungsbeispiel Düngemittel, wird von den jeweils einen Leitschacht 18 aufweisenden Materialleitelementen 14 jeweils zu zwei Einlasstrichtern 12 geleitet. Die aneinander anstoßenden Seitenwände der Einlasstrichter 12 befinden sich in der Mitte des Leitschachtes 18 der Materialleitelemente 14. Hierdurch wird das von den Dosierelementen 6 der oberen Querreihe dosierte Material zumindest annähernd hälftig auf jeweils einem Einlasstrichter 12 aufgeteilt.

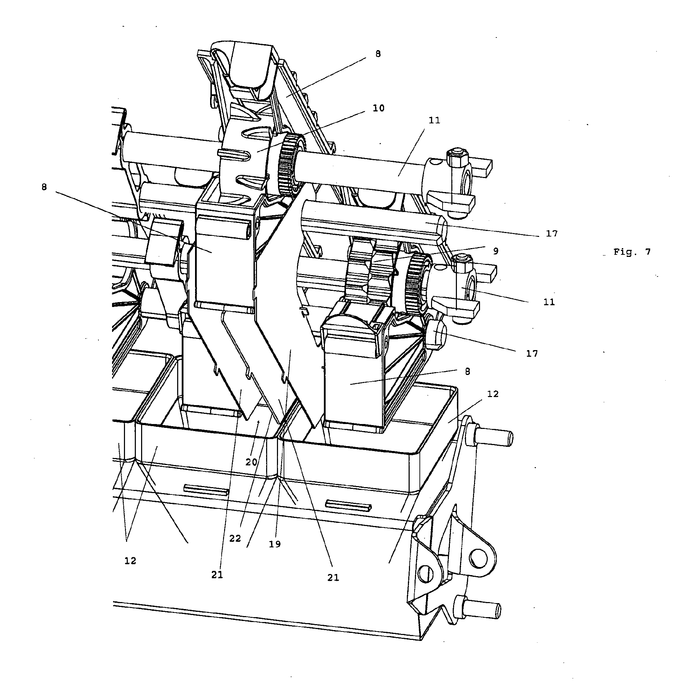

Die Ausgestaltung der Materialleitelemente 19 gemäß Fig. 7 unterscheidet sich von den vorhergehenden Materialleitelementen 12 dadurch, dass in den Materialleitelementen 19 des Leitschachtes 20 ein dem Leitschacht 20 in zwei voneinander getrennte Leitkanäle 21 aufteilende Trennwand 22 angeordnet ist. Hierdurch wird das von den jeweiligen Dosierelementen 6 der oberen Querreihe dosierte Material bereits direkt unterhalb des Dosierrades 10 von der Trennwand 22 hälftig geteilt, so dass das Material durch die beiden entstandenen Leitkanäle 21 eines Materialleitelementes getrennt jeweils dem jeweiligen Einlasstrichter 12 zugeleitet wird.

## Patentansprüche

1. Verteilmaschine, insbesondere Sämaschine, mit zumindest je einem langgestreckten Vorratsbehälter zur getrennten Aufnahme von Saatgut und Düngemitteln, in deren unteren Bereichen beabstandet zueinander Auslauföffnungen mit zugeordneten Dosierelementen angeordnet sind, wobei unter den Dosierelementen das von den Dosierelementen dosierte Saatgut und Düngemittel in Richtung des Bodens leitende Leitelemente angeordnet sind, wobei die Leitelemente zu Beginn einen sich in Richtung der Dosierelemente und/oder nach oben erweiternden Einlasstrichter aufweisen, wobei jeweils jedem Saatgut dosierenden Dosierelement ein derartiger Einlasstrichter zugeordnet ist, wobei die dem einen Vorratsbehälter zugeordneten Dosierelemente in einer Querreihe und einer Ebene oberhalb den dem anderen Vorratsbehälter zugeordnete Dosierelemente angeordnet sind, **dadurch gekennzeichnet, dass** zwischen den in der oberen Querreihe angeordneten Dosierelementen (6) und den Einlauftrichtern (12) das von den in der oberen Querreihe angeordneten Dosierelementen (6) zu den Einlauftrichtern (12) geförderte Material leitende Materialleitelemente (14,19) angeordnet sind, dass die Materialleitelemente (14,19) in dem Zwischenraum (13) zwischen zwei in der unteren Querreihe benachbarten zueinander angeordneten Dosierelementen (6) angeordnet sind.

2. Verteilmaschine nach Anspruch 1, **dadurch gekennzeichnet, dass** die in der oberen und der unteren Querreihe angeordneten Dosierelemente (6) seitlich versetzt zueinander angeordnet sind und zwar derart, dass jeweils ober- oder unterhalb des Zwischenraumes zwischen benachbarten Dosierelementen (6) der anderen Querreihe ein Dosierelement (6) angeordnet ist.

3. Verteilmaschine nach Anspruch 1, **dadurch gekennzeichnet, dass** in der oberen Querreihe die halbe Anzahl der Dosierelemente (6) der unteren Querreihe angeordnet sind, und dass die in der oberen Querreihe angeordneten Dosierelemente (6) seitlich versetzt zueinander angeordnet sind und zwar derart, das die jeweils oberhalb des Zwischenraumes (13) zwischen benachbarten Dosierelementen (6) der unteren Querreihe angeordnet sind.

4. Verteilmaschine nach Anspruch 1, **dadurch gekennzeichnet, dass** in den Materialleitelementen (19) des Materialleitschachts (20 eine den Materialschacht (20) in zwei voneinander getrennte Leitkanäle (21) aufteilende Trennwand (22) angeordnet ist
